# EUROPÄISCHE PATENTSCHRIFT

(11) **EP 0 563 606 B1**
(45) Veröffentlichungstag und Bekanntmachung des Hinweises auf die Patenterteilung: **15.07.1998**
(21) Anmeldenummer: 93103444.1
(22) Anmeldetag: 04.03.1993
(51) Int. Cl.: H01F 38/28, H01F 1/14, H01H 83/02, H01H 83/00

(54) **Stromwandler für pulsstromsensitive Fehlerstromschutzschalter**
Current transformer for earth-leakage circuit breakers which are sensitive to current pulses
Transformateur de courant pour un disjoncteur à courant de défaut sensible aux courants pulsatoires

(30) Priorität: 01.04.1992 DE 4210748
(43) Veröffentlichungstag der Anmeldung: 06.10.1993
(73) Patentinhaber: Vacuumschmelze GmbH, 63450 Hanau (DE)
(72) Erfinder: Herzer, Giselher, Dr., W-6450 Hanau 1 (DE); Hilzinger, Hans Reiner, Dr., W-6456 Langenselbold (DE)
(74) Vertreter: Epping, Wilhelm, Dr.-Ing.

(56) Entgegenhaltungen:
- EP-A- 0 060 660
- EP-A- 0 271 657
- DE-A- 3 911 480
- DE-B- 2 044 302
- DE-C- 3 026 498

## Beschreibung

Die Erfindung betrifft einen Stromwandler für Fehlerstromschutzschalter.

Fehlerstromschutzschalter (FI-Schalter) finden seit vielen Jahren Anwendung für den Personen- und Maschinenschutz. Der FI-Schalter enthält einen Fehlerstromwandler, der einen Kern aus einer weichmagnetischen Legierung aufweist. Die Sekundärwicklung des Fehlerstromwandlers ist dabei beispielsweise mit einem Relais verbunden, das beim Auftreten von Fehlerströmen den Verbraucherstromkreis, der gleichzeitig als Primärwicklung dient, unterbricht. Wesentliche Bedeutung für die Funktionsfähigkeit des FI-Schalters hat der weichmagnetische Kern, der als Summenstromwandler wirkt. Bei FI-Schaltern für den Personenschutz liegt der Auslösestrom beispielsweise nur bei 30 mA, während er bei FI-Schaltern für den Maschinenschutz im Bereich von etwa 300 bis 500 mA liegt.

Durch die verstärkte Anwendung elektronischer Schaltungen beispielsweise bei Haushaltsgeräten wurden FI-Schalter gefordert, die nicht nur bei Wechselströmen, sondern auch bei pulsierenden Gleichfehlerströmen, die innerhalb jeder Periode der Netzfrequenz nur bei einer Halbperiode auftreten, sicher ansprechen. Die für solche sogenannte pulsstromsensitive FI-Schalter gültigen Grenzwerte sind für die Bundesrepublik Deutschland nach VDE 0664 festgelegt und beispielsweise in der Firmenschrift PW-002 der Vacuumschmelze mit dem Titel "Ringbandkerne für pulsstromsensitive Fehlerstrom-Schutzschalter" für verschiedene Fehlerstromverläufe dargelegt. In dieser Schrift sind auch geeignete kristalline Magnetkernwerkstoffe für diese Anwendung angegeben. Die wichtigsten Kenngrößen der Werkstoffe sind die Induktionsamplitude bei sinusförmigem Erregerstrom, der statische Induktionshub bei einweggleichgerichtetem sinusförmigem Erregerstrom sowie der dynamische Induktionshub bei zweiweggleichgerichtetem sinusförmigem Erregerstrom.

Aus DE 20 44 302 ist ein Fehlerstromschutzschalter mit einem Summenstromwandler bekannt, der einen Magnetkern aufweist mit Primärwicklungen zum Anschluß an einen zu überwachenden Stromkreis mit einer Sekundärwicklung, die die Erregerwicklung eines auf ein Schaltschloß für eine Schalteinrichtung einwirkenden Auslösemagneten speist. Der Fehlerstromschutzschalter weist einen Magnetkern mit einem derart großen Induktionshub auf, daß eine durch einen pulsierenden, in einer Primärwicklung des Summenstromwandlers fließenden Gleichstromfehlerstrom in der Sekundärwicklung induzierte Spannung zum Betätigen des Auslösemagneten ausreicht.

Aus der DE-A 30 28 595 ist es weiterhin bekannt, daß für FI-Schalter, die auf pulsierende Gleichstromfehlerströme ansprechen sollen, ein Magnetkernwerkstoff mit flacher Hystereseschleife eingesetzt wird. Der dynamische Induktionshub soll großer oder gleich 0,1 T sein und gleichzeitig das Verhältnis von statischem Induktionshub zu dynamischem Induktionshub nicht mehr als 1,3 betragen. Geeignete Magnetwerkstoffe werden dort jedoch nicht angegeben. Zur Steigerung der Empfindlichkeit ist ferner vorgesehen, daß zwischen der Sekundärwicklung des Stromwandlers und der Auslösewicklung des Relais zur Unterbrechung des Verbraucherstromkreises ein Kondensator geschaltet ist, so daß aus der Sekundärwicklung und dem Kondensator ein Schwingkreis gebildet wird. Die Resonanzfrequenz dieses Schwingkreises muß dabei auf die Frequenz der Spannung abgestimmt werden, die in der Sekundärwicklung durch den Fehlerstrom auftritt.

Die Wirkungsweise der Resonanzschaltung ist beispielsweise in der DE-C 32 01 569 näher erläutert. In der Praxis werden FI-Schalter, insbesondere solche für Personenschutz mit einem maximalen Auslösestrom von 30 mA, heutzutage mit einem solchen Resonanzkreis zur Erzielung einer hohen Ansprechempfindlichkeit hergestellt. Die Abstimmung des Resonanzkreises wird dabei experimentell (oder empirisch) durchgeführt und erweist sich als sehr aufwendig. Hierzu werden, ausgehend von vorgegebenen Kapazitätswerten des Kondensators und der Empfindlichkeit des Auslöserelais, verschiedene Windungszahlen der Sekundärwicklung eingestellt und die Auslösebedingungen des FI-Schalters ermittelt. Die endgültig eingesetzte Windungszahl stellt dabei lediglich einen Kompromiß für die verschiedenen Fehlerstromformen dar. Es besteht daher ein Bedarf an Stromwandlern, welche bei verschiedenen Fehlerstromformen möglichst gleiche Auslösewerte für den Fehlerstrom ergeben oder welche sogar einen Resonanzkreis entbehrlich machen.

Aus der DE-A 39 11 480 ist allgemein die Verwendung neuer feinkristalliner Eisenbasislegierungen mit einer Korngröße von weniger als 100 nm als Magnetkernwerkstoff für FI-Schalter bekannt. Diese Legierungen weisen insbesondere eine geringe Temperaturabhängigkeit der für die Anwendung in FI-Schaltern wesentlichen Magnetwerte im Temperaturbereich von -25 bis +80 °C auf.

Die verwendeten feinkristallinen Eisenbasislegierungen sowie die Herstellungsverfahren sind an sich aus der EP-A 271 657 bekannt. Aus einer Legierungsschmelze wird durch ein Raschabschreckungsverfahren zunächst ein amorphes Band hergestellt. Dieses Band kann dann beispielsweise zu einem Ringkern gewickelt werden. Durch eine Wärmebehandlung erfolgt schließlich die Überführung in die feinkristalline Phase. Es sind sowohl dort als auch in den Veröffentlichungen von Herzer in IEEE TRANS. ON MAGNETICS 26, Heft 5, S. 1397 sowie von Yoshizawa und Yamauchi in IEEE TRANSLATION JOURNAL ON MAGNETICS IN.JAPAN, Vol. 5, Nr. 11, Seiten 1070 bis 1076 und in IEEE TRANSACTIONS ON MAGNETICS, Vol. 25, Nr. 5, Seiten 3324 bis 3326 Untersuchungen zum Einfluß unterschiedlicher Wärmebehandlungen auf einzelne magnetische Eigenschaften bekannt.

Aufgabe der Erfindung ist es demgegenüber einen Stromwandler für FI-Schalter bzw. einen FI-Schalter anzugeben, der eine sichere Unterbrechung eines Verbraucherstromkreises unter pulsförmigen Fehlerströmen gestattet, wobei die Auslösung weitgehend unabhängig von der Fehlerstromform (Sinuswelle, Halbwelle oder Teile einer Halbwelle durch Phasenanschnittschaltungen) erfolgt und gleichzeitig eine kompakte Bauform ermöglicht wird. Darüber hinaus soll in einer besonderen Ausführungsform bei ausreichender Ansprechempfindlichkeit des FI-Schalters eine Vereinfachung der Schaltungsdimensionierung und der Schaltung selbst erreicht werden.

Die erstgenannte Aufgabe wird durch einen Stromwandler mit den Merkmalen des Anspruchs 1 gelöst. Der Lösung liegt dabei die Erkenntnis zugrunde, daß für eine hohe Ansprechempfindlichkeit eines Stromwandlers für pulsstromsensitive FI-Schalter neben einem hohen maximalen dynamischen Induktionshub (Magnetisierungsstrom: Zweiweggleichgerichteter Sinus) auch ein hoher Wert des dynamischen Induktionshubes bei möglichst kleiner Feldstärkeamplitude und gleichzeitig ein möglichst hoher Wert des Verhältnisses von dynamischem Induktionshub ΔB(dyn) zu Induktionsamplitude B̂ (sinusförmige Felderregung) erforderlich ist.

Durch die hohen Werte für den maximalen dynamischen Induktionshub und für den Induktionshub bei 100 mA/cm wird zum einen eine volumenmäßige Reduzierung des Magnetkerns und damit auch des Stromwandlers und des FI-Schalters ermöglicht. Dies bedeutet neben einem Kostenvorteil insbesondere auch die Möglichkeit eines platzsparenden Einbaus, so daß der FI-Schalter beispielsweise direkt in eine Steckdose oder ein elektrisches Gerät mit eingebaut werden kann. Andererseits werden dadurch jedoch auch geringere Anforderungen an die Empfindlichkeit des Relais zur Unterbrechung des Verbraucherstromkreises gestellt.

Liegt ferner das Verhältnis von dynamischem Induktionshub zu Induktionsamplitude über den gesamten für die Anwendung relevanten Feldstärkebereich (bis zu etwa 100 mA/cm) erfindungsgemäß oberhalb des Wertes von 0,7, insbesondere jedoch oberhalb von 0,8, so erfolgt überraschenderweise die Auslösung des FI-Schalters weitgehend unabhängig von der Fehlerstromform (Sinuswelle, Halbwelle oder Teile einer Halbwelle durch Phasenanschnittschaltungen) bei etwa dem gleichen Wert des Fehlerstroms. Die Bedeutung dieses Verhältnisses für eine gleichmäßige Auslöseschwelle war bisher nicht bekannt. Auch in der DE-A 30 28 595, die sich mit den Magneteigenschaften der Kerne von pulsstromsensitiven FI-Schaltern auseinandersetzt, wird neben dem dynamischen Induktionshub allein das Verhältnis von dynamischem zu statischem Induktionshub als relevant angesehen. Mit einem erfindungsgemäßen Kern kann insbesondere fallweise auch auf einen Resonanzkreis verzichtet und somit eine Vereinfachung der Schaltungsdimensionierung durch Wegfall der Resonanzfrequenzbestimmung und der Schaltung selbst (kein Resonanzkondensator) erreicht werden.

Es wurde gefunden, daß die obengenannten Magnetwerte mit feinkristallinen Eisenbasislegierungen mit einem Eisengehalt von mehr als 60 at-% erreichbar sind, deren Gefüge zu mehr als 50 % aus feinkrista.llinen Körnern mit einer Korngröße von weniger als 100 nm besteht und die neben Eisen im wesentlichen (in at-%) 0,5 bis 2 % Kupfer, 2 bis 5 % mindestens eines der Metalle Niob, Wolfram, Tantal, Zirkonium, Hafnium, Titan und/oder Molybdän und 5 bis 14 % Bor sowie Silizium enthalten, wobei erfindungsgemäß der Si-Gehalt 14 bis 17 at.-% beträgt. Die besten Magnetwerte im Hinblick auf die vorgesehene Anwendung wurden mit einer Legierung erzielt, die etwa 15,5 % Silizium enthielt. Bei deutlich kleineren Siliziumgehalten wird die Wärmebehandlung zunehmend schwieriger. Oberhalb eines Siliziumgehalts von 17 % neigen die Legierungen zu Sprödigkeit und lassen sich schwierig zu Kernen verarbeiten. Vorteilhaft ist bei diesen Legierungen zusätzlich die sehr geringe Empfindlichkeit des dynamischen Induktionshubes gegenüber Kerndeformationen.

Die Magnetwerte liegen bei den erfindungsgemäßen Stromwandlern dabei insbesondere deutlich oberhalb der Werte, wie sie in der DE-A 39 11 480 für den dort angegebenen Magnetkern mit flacher Hystereseschleife auftreten, obwohl es sich weitgehend um die gleichen Legierungen handelt. Die überlegenen magnetischen Eigenschaften der erfindungsgemäßen Stromwandler werden dabei durch eine spezielle Wärmebehandlung der Magnetkerne erzielt.

Die erfindungsgemäß eingesetzten Magnetkerne weisen eine flache Hystereseschleife mit einem Remanenzverhältnis von weniger als 0,3 auf (quasistatisch gemessen bei 0,1 Hz). Wird das Remanenzverhältnis größer, so ist damit - wie die Untersuchungen gezeigt haben - eine Abnahme des Induktionshubes vornehmlich bei höheren Feldstärkeamplituden verbunden. Die Stromwandler und FI-Schalter werden dann unempfindlich gegenüber pulsförmigen Stromfehlern. Besonders vorteilhaft sind daher Magnetkerne mit einem Remanenzverhältnis von weniger als 0,1.

Die Erfindung wird im folgenden anhand der Figuren und der Ausführungsbeispiele näher erläutert. Es zeigen:
Fig. 1 die Abhängigkeit des dynamischen Induktionshubes von der Feldstärkeamplitude;
Fig. 2 die Abhängigkeit der Verhältnisse dynamischer Induktionshub zu Induktionsamplitude und dynamischer Induktionshub zu statischem Induktionshub von der Feldstärkeamplitude;
Fig. 3 die Abhängigkeit des dynamischen Induktionshubes von der Feldstärkeamplitude für ein weiteres Beispiel;
Fig. 4 die Abhängigkeiten der Verhältnisse dynamischer Induktionshub zu Induktionsamplitude und dynamischer Induktionshub zu statischem Induktionshub von der Feldstärkeamplitude für ein weiteres Beispiel;
Fig. 5 die Definition der Größe H_{0,7} und den Zusammenhang zwischen dynamischem Induktionshub bzw. Induktionsamplitude und H_{0,7};
Fig. 6 das Prinzipschaltbild eines FI-Schalters;
Fig. 7 die Abhängigkeit des dynamischen Induktionshubes vom Si-Gehalt (Feldstärkeamplitude Ĥ = 100 mA/cm);
Fig. 8 die Erhöhung des dynamischen Induktionshubes durch die Wärmebehandlung (Ĥ = 100 mA/cm);
Fig. 9 die Abhängigkeit des dynamischen Induktionshubes von der Kerndeformation (Ĥ = 100 mA/cm).

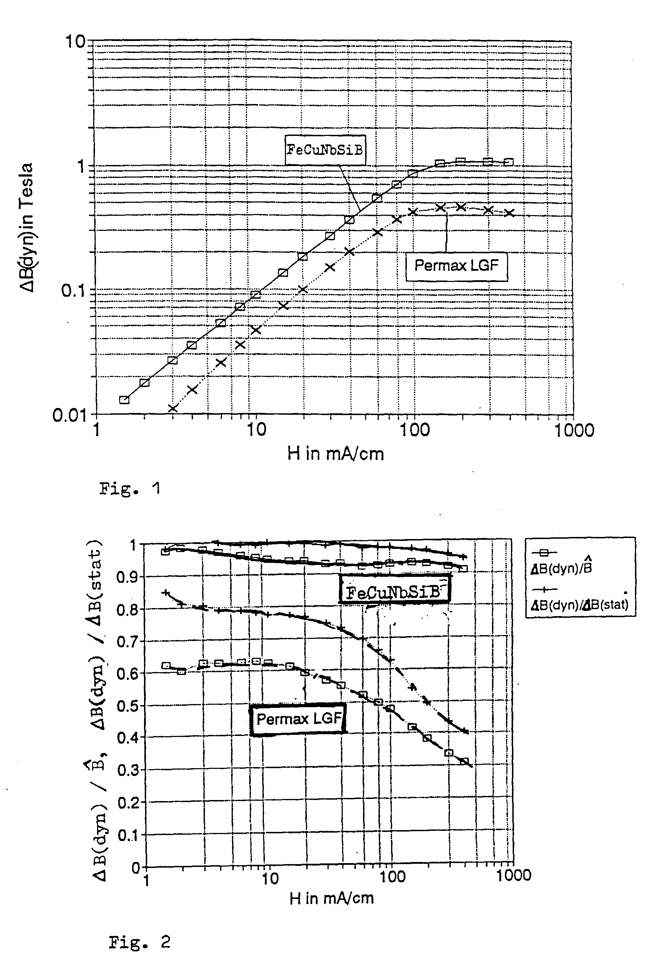

Alle in den Fig. 1 bis 9 dargestellten Messungen erfolgten bei Netzfrequenz (50 Hz).

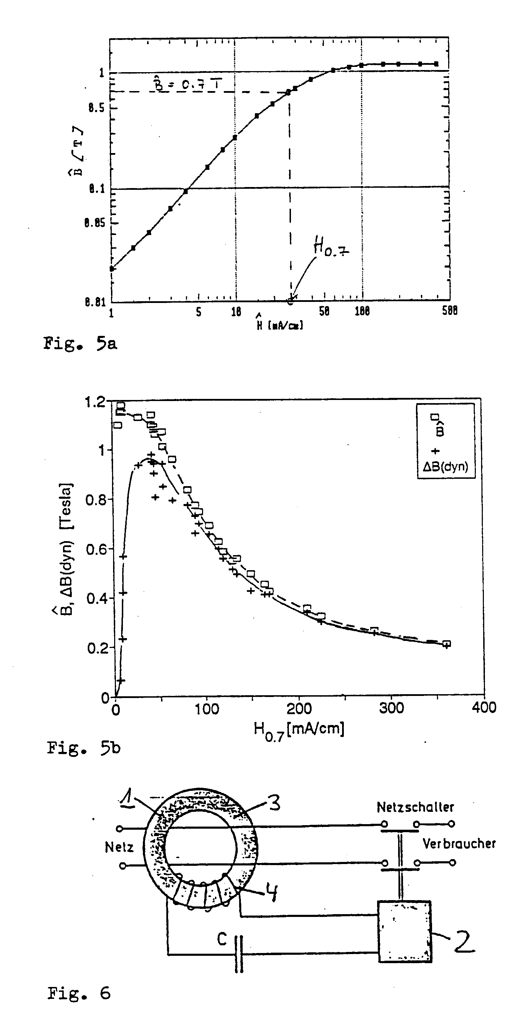

Fig. 6 zeigt den prinzipiellen Aufbau eines Fehlerstromschutzschalters. Dieser enthält einen Fehlerstromwandler 1, der als Summenstromwandler ausgebildet ist, und beispielsweise ein Relais 2 zur Unterbrechung des Verbraucherstromkreises. Der Fehlerstromwandler 1 weist einen Ringkern 3 auf, durch den im dargestellten Beispiel der Verbraucherstromkreis als Primärwicklung hindurchgeführt wird (Durchsteckwandler). Die Sekundärwicklung 4 bildet zusammen mit dem Kondensator C einen Resonanzkreis und ist mit dem Relais 2 verbunden, das beim Auftreten von Fehlerströmen und damit von Spannungsänderungen in der Sekundärwicklung 4 den Verbraucherstromkreis unterbricht. Weitere Abwandlungen sind dem Fachmann bekannt.

### Ausführungsbeispiele

Die Magnetkerne für den Stromwandler wurden zunächst in an sich bekannter Weise aus einem durch Rascherstarrung erhaltenen dünnen Band im obengenannten Legierungsbereich hergestellt. Die Kerne wurden dann einer zweistufigen Wärmebehandlung in Magnetfeldern ausgesetzt, wobei die erste Wärmebehandlungsstufe in einem Längsfeld (Magnetfeld parallel zur Bandrichtung) und die zweite Wärmebehandlungsstufe in einem Querfeld (Magnetfeld senkrecht zur Bandrichtung) durchgeführt wurde. Durch diese Wärmebehandlung wurden die erfindungsgemäß hohen Magnetwerte eingestellt.

In Fig. 1 ist der dynamische Induktionshub in Abhängigkeit von der Feldstärkeamplitude für die feinkristalline Eisenbasislegierung mit 1 % Kupfer, 3 % Niob, 15,5 % Silizium, 7 % Bor, Rest Eisen, dargestellt, die einer solchen zweistufigen Wärmebehandlung unterzogen wurde, wobei die erste Stufe der Wärmebehandlung für eine Dauer von 1 h bei einer Temperatur von 540 °C im Längsfeld erfolgte. Daran schloß sich eine 4-stündige Wärmebehandlung im Querfeld bei einer Temperatur von 450 °C an. Wie aus Fig. 1 zu ersehen ist, liegt nach dieser Wärmebehandlung der Maximalwert des dynamischen Induktionshubes bei mehr als 1 T, während er selbst bei 100 mA/cm bereits mehr als 0,8 T beträgt. Zum Vergleich sind noch die Werte für eine Nickel-Eisen-Legierung nach dem Stand der Technik eingetragen, die unter der Bezeichnung PERMAX LGF von der Vacuumschmelze GmbH für pulsstromsensitive Fehlerstromschutzschalter angeboten wird.

In Fig. 2 ist sowohl das Verhältnis ΔB(dyn) / B̂ als auch ΔB(dyn) /ΔB(stat) ( Magnetisierungsstrom bei statischem Induktionshub ΔB(stat): Einweggleichgerichteter Sinus) für die genannte erfindungsgemäße Legierung als auch für PERMAX LGF dargestellt. Mit den erfindungsgemäßen Magnetkernen werden somit Werte von mehr als 0,9 T über den gesamten relevanten Feldstärkebereich sichergestellt, während die bekannte kristalline Legierung nach dem Stand der Technik sowohl niedrigere Werte als auch einen drastischen Abfall bereits bei in FI-Schaltern auftretenden Feldstärkeamplituden aufweist.

Die Erzielung solch hoher Magnetwerte mit einer mehrstufigen Wärmebehandlung, die eine Behandlungsstufe im Längsfeld beinhaltet, ist dabei um so überraschender als in Vergleichsversuchen mit einer reinen Längsfeldwärmebehandlung bei der obengenannten Legierung beispielsweise nur ein sehr geringer Wert für den dynamischen Induktionshub von nur etwa 0,02 T bei einer Feldstärkeamplitude von 100 mA/cm erreicht wurde.

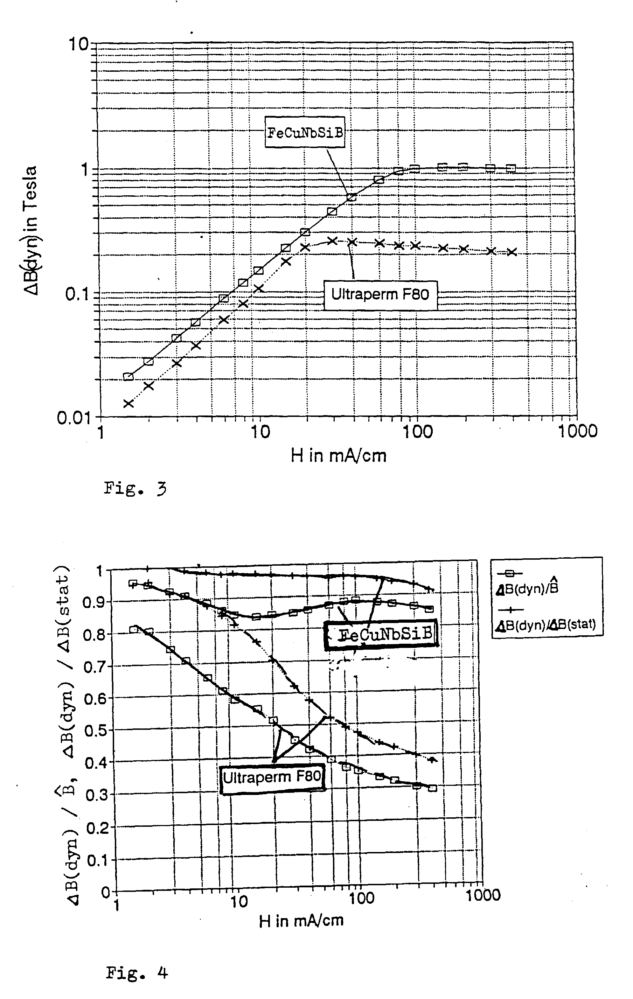

In den Fig. 3 und 4 sind dieselben magnetischen Eigenschaften wie in den Fig. 1 und 2 derselben feinkristallinen Eisenbasislegierung aufgetragen. Gegenüber dem vorangegangenen Ausführungsbeispiel wurde lediglich die Temperatur der zweiten Wärmebehandung um 100 °C auf 350 °C reduziert. Wie aus dem Vergleich von Fig. 3 und 1 zu ersehen ist, ergibt sich hierdurch eine Erhöhung von ΔB(dyn) bei kleineren Feldstärkeamplituden, während der Maximalwert unverändert bleibt. Gleichzeitig ändert sich jedoch das Verhältnis von ΔB(dyn) zu AB(stat) geringfügig stärker. Für die vorgesehene Anwendung sind insbesondere Magnetkerne mit ΔB(dyn) / B̂ > 0,8 vorteilhaft. Ist ferner das Verhältnis ΔB(dyn) /ΔB(stat) > 0,9, so hat dies den Vorteil, daß eine Auslösung des FI-Schalters sowohl in der positiven als auch in der negativen Halbwelle des Verbraucherstroms möglich ist. Zum Vergleich sind in den Fig. 3 und 4 wiederum die Werte für eine bekannte kristalline Legierung mit flacher Hystereseschleife eingetragen, die unter der Bezeichnung ULTRAPERM F80 von der Vacuumschmelze GmbH ebenfalls für den gleichen Zweck angeboten wird. Es wurde gefunden, daß mit herkömmlichem Kern aus ULTRAPERM F80 die Auslösung bei unterschiedlichen Stromwerten je nach Fehlerstromform vorliegt, während im vorgeschlagenen Fall enge Werte für den Auslösestrom resultieren.

In weiteren Ausführungsbeispielen wurden die Bedingungen für die Wärmebehandlung näher untersucht. Dabei wurde die erste Wärmebehandlung im Temperaturbereich von 480 bis 600 °C variiert, bei Behandlungszeiten von 0,2 bis 10 h. Diese erste Wärmebehandlung dient im wesentlichen zur Einstellung der nanokristallinen Struktur in den Legierungsbändern.

Hinsichtlich der zweiten Stufe der Wärmebehandlung, die im Querfeld durchgeführt wird, wurden Versuche mit Behandlungsdauern zwischen 0,5 und 8 h durchgeführt, die durchweg zu guten Ergebnissen führten. Dabei werden mit zunehmender Dauer der Wärmebehandlung die Anlaßtemperaturen zur Erzielung desselben ΔB(dyn) - Niveaus etwas zu niedrigeren Temperaturen verschoben. Die optimale Anlaßtemperatur kann dabei im Bereich zwischen etwa 200 °C und der Temperatur der ersten Wärmebehandlung liegen. Die für jede Legierungszusammensetzung optimale Temperatur und Dauer der Wärmebehandlung zur Erzielung der höchsten Magnetwerte wird sinnvoller Weise durch wenige Stichversuche ermittelt, jedoch wird jede der Wärmebehandlungen vorzugsweise für eine Dauer von 0,2 bis 20 h durchgeführt.

Alternativ kann das Wärmebehandlungsverfahren auch derart abgewandelt werden, daß die zweite Wärmebehandlungsstufe in dem Magnetfeld senkrecht zur Bandrichtung (Querfeld) in der Abkühlphase nach der ersten Wärmebehandlung durchgeführt wird. Die Abkühlgeschwindigkeit sollte dann etwa im Bereich von 0,1 bis 10 K/min liegen, je nach angestrebtem Wert für den dynamischen Induktionshub.

Es hat sich weiterhin gezeigt, daß die erste Wärmebehandlungsstufe auch ohne Magnetfeld durchgeführt werden kann. Ferner ist es prinzipiell möglich, zuerst , d. h. in der ersten Wärmebehandlungsstufe, eine Querfeldbehandlung durchzuführen und die Längsfeldbehandlung bzw. die Behandlung ohne Feld in der zweiten Wärmebehandlungsstufe anzuschließen. Die Bedingungen können daher innerhalb eines großen Rahmens variiert werden. Findet die Wärmebehandlung jedoch vollständig in einem magnetischen Querfeld oder in einem Längsfeld statt, so ist keine Anhebung des dynamischen Induktionshubes möglich.

In weiteren Ausführungsbeispielen wurden Magnetkerne aus Eisenbasislegierungen mit 1 % Kupfer, 3 % Niob, Rest Eisen sowie Silizium und Bor untersucht, wobei der Si-Gehalt 12,5, 13,5 (Vergleichsbeispiele) und 15,5 %, der Borgehalt 7, 8 und 9 % betrug. Kerne aus diesen unterschiedlichen Legierungen wurden unterschiedlichen erfindungsgemäßen Wärmebehandlungen unterzogen, wobei für die erste Wärmebehandlung im Längsfeld jedoch stets eine Temperatur von 540 °C bei einer Dauer von 1 h gewählt wurde. Die zweite Wärmebehandlungsstufe im Querfeld wurde für eine Dauer von 4 h bei Temperaturen zwischen 300 und 600 °C durchgeführt.

An diesen Kernen wurde zunächst jeweils die Feldstärke H_{0,7} bestimmt, bei der mit 50 Hz Sinusanregung eine Induktionsamplitude von 0,7 T erzielt wird. Fig. 5a zeigt die Definition von H_{0,7} graphisch am Beispiel eines Kerns mit 15,5% Silizium und 7% Bor. Für alle obengenannten Kerne wurde dann der dynamische Induktionshub und die Induktionsamplitude jeweils bei einer Feldstärkeamplitude von 100 mA/cm mit 50 Hz Anregung bestimmt und die Meßwerte wurden gegen H_{0,7} aufgetragen. Wie Fig. 5b zeigt wird ein erfindungsgemäßer dynamischer Induktionshub von mehr als 0,7 T bei einer Feldstärkeamplitude von 100 mA/cm dann erreicht, wenn H_{0,7} im Bereich zwischen 10 und 120 mA/cm liegt. Für die erfindungsgemäße Anwendung können daher solche Magnetkerne ausgewählt werden, die bei 50 Hz Sinusanregung eine Induktionsamplitude von 0,7 T mit einer Feldstärkeamplitude im Bereich von 10 bis 120 mA/cm erreichen. Durch diese Erkenntnis kann der Fachmann geeignete Magnetkerne auswählen, bzw. diese Eigenschaften durch eine entsprechende Wärmebehandlung gezielt einstellen.

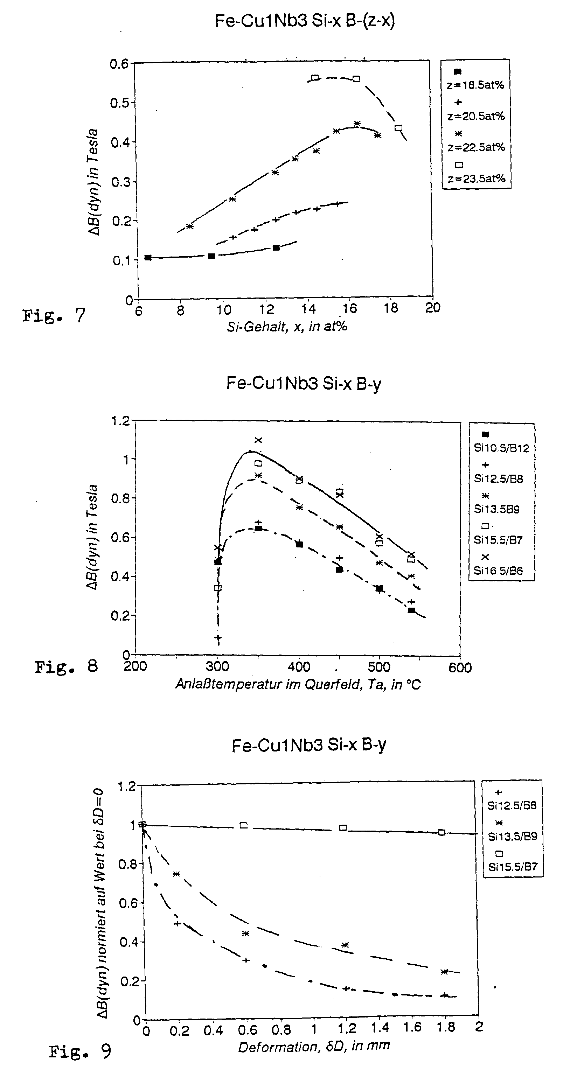

Die Bedeutung der Legierungszusammensetzung, insbesondere des Si-Gehaltes der Legierung für den vorgesehenen Anwendungszweck wird aus den Fig. 7 bis 9 ersichtlich.

Fig. 7 zeigt die Abhängigkeit des dynamischen Induktionshubes vom Si-Gehalt für verschiedene Metalloidgehalte der Magnetkerne. Diese Darstellung läß ein Maximum des dynamischen Induktionshubes im Bereich um etwa 16 at.-% Si erwarten. Die erreichten Magnetwerte für den dynamischen Induktionshub sind nach Fig. 7 allerdings durchweg niedriger als 0,6 T. Dies bedeutet, daß neben der Legierungszusammensetzung - wie bereits beschrieben - die Wärmebehandlung von wesentlicher Bedeutung ist. Bei den in Fig. 7 dargestellten Beispielen wurde eine 1-stündige Wärmebehandlung bei einer Temperatur von 540 ° im Querfeld vorgenommen.

Fig. 8 zeigt die Abhängigkeit des dynamischen Induktionshubes von der Anlaßtemperatur im Querfeld im Falle einer erfindungsgemäßen Wärmebehandlung. Die Wärmebehandlung wurde 2-stufig durchgeführt, wobei die Temperatur bei der 1. Stufe 540 ° betrug. Die 2. Stufe der Wärmebehandlung erfolgte im Querfeld für eine Dauer von 4 Stunden. Wie aus Fig. 8 ersichtlich ist, läßt sich mit einer solchen Wärmebehandlung für Legierungen mit einem Si-Gehalt von 10,5 bzw. 12,5 % ein dynamischer Induktionshub von maximal 0,6 T erzielen, wobei allerdings die Anlaßtemperatur noch in engen Grenzen genau eingehalten werden muß. Weisen die Legierungen dagegen einen erfindungsgemäßen Si-Gehalt auf, so ist aus Fig. 8 ersichtlich, daß die Anlaßtemperatur in einem wesentlich größeren Temperaturbereich variiert werden kann und daß wesentlich höhere Werte für den dynamischen Induktionshub erzielt werden.

Überraschenderweise hat sich weiterhin gezeigt, daß mit Legierungen, die einen Si-Gehalt von 14 bis 17 % aufweisen, Magnetkerne mit einer geringen Abhängigkeit des dynamischen Induktionshubes von einer mechanischen Deformation hergestellt werden können. Fig. 9 zeigt hierzu die Abhängigkeit des dynamischen Induktionshubes von einer Deformation. Der dynamische Induktionshub ist dabei auf einen Wert bei δD = 0 definiert. Mit δD ist die Differenz des Kerndurchmessers im nichtdeformierten und im deformierten Zustand bezeichnet. Wie aus Fig. 9 ersichtlich ist, ist bei dem erfindungsgemäßen Magnetkern mit einem Si-Gehalt von 15,5 % nur eine sehr geringe Abnahme des dynamischen Induktionshubes und der Deformation zu beobachten. Demgegenüber weisen die beiden Vergleichskerne mit Si-Gehalten von 13,5 bzw. 12,5 % wesentlich größere Abnahmen des dynamischen Induktionshubes und der Deformation auf. Dies bedeutet, daß die erfindungsgemäßen Kerne mit einem Si-Gehalt von mehr als 14 at.-% mechanisch wesentlich unempfindlicher sind als Kerne aus Legierungen mit geringerem Si-Gehalt.

Bei Einsatz eines Stromwandlers mit den angegebenen Kernen in pulsstromsensitiven FI-Schaltern kann in vielen Fällen aufgrund des bereits sehr hohen Induktionshubes auf eine Erhöhung desselben durch eine Resonanzschaltung verzichtet werden. Dies bedeutet neben der Einsparung des Kondensators C (Fig. 6) den Wegfall der sehr arbeitsaufwendigen und hinsichtlich der verschiedenen Fehlerstromformen nur als Kompromiß durchführbaren Dimensionierung des Resonanzkreises. Ob im speziellen Fall hierauf verzichtet werden kann, hängt aber nicht zuletzt auch von der Empfindlichkeit des eingesetzten Relais und der geforderten Größe des FI-Schalters und damit des Magnetkerns sowie von der Auslösestromstärke des Schalters ab.

Die erfindungsgemäßen Stromwandler können sowohl in FI-Schaltern mit einem Auslösestrom von 30 mA für den Personenschutz als auch in den unempfindlicheren FI-Schaltern mit einem Auslösestrom von 300 bzw. 500 mA eingesetzt werden. Die Unterschiede zwischen diesen verschiedenen Typen liegen insbesondere im Arbeitspunkt, der bei 30 mA FI-Schaltern im Feldstärkebereich von etwa 10 bis 50 mA/cm und bei den unempfindlicheren FI-Schaltern mit Auslöseströmen von 300 bzw. 500 mA im Feldstärkebereich von etwa 20 bis 100 mA liegt. Wie aus den Figuren 2 und 4 hervorgeht wird die erfindungsgemäße Bedingung hinsichtlich des Verhältnisses von dynamischem Induktionshub zu Induktionsamplitude über den gesamten interessierenden Feldstärkebereich erfüllt. Die genauen Werte für die verschiedenen Arbeitspunkte lassen sich aus den angegebenen Kurven leicht entnehmen.

## Patentansprüche

1. Stromwandler (1) für Fehlerstromschutzschalter mit einem Magnetkern (3) aus einer weichmagnetischen Eisenbasislegierung, deren Gefüge zu mehr als 50 % aus feinkristallinen Körnern mit einer Korngröße von weniger als 100 nm besteht und die neben einem Eisengehalt von mehr als 60 at.-% weiterhin (in at.-%) 0,5 bis 2 % Kupfer, 2 bis 5 % mindestens eines der Metalle Niob, Wolfram, Tantal, Zirkonium, Hafnium, Titan und/oder Molybdän, 5 bis 14 % Bor sowie Silizium enthält, **dadurch gekennzeichnet,** daß zur Erzielung eines pulsstromsensitiven Verhaltens des Stromwandlers der Magnetkern (3) ein Remanenzverhältnis Br / Bs < 0,3, einen dynamischen Induktionshub ΔB(dyn) von mehr als 0,6 T bei einer Feldstärkeamplitude von 100 mA/cm, einen maximalen dynamischen Induktionshub von mehr als 0,7 T und ein Verhältnis von dynamischem Induktionshub zu Induktionsamplitude ΔB(dyn)/B̂ von mehr als 0,7 aufweist und der Siliziumgehalt der Legierung 14 bis 17 % beträgt.

2. Stromwandler nach Anspruch 1, **gekennzeichnet durch** ein Remanenzverhältnis von weniger als 0,1.

3. Stromwandler nach Anspruch 1 oder 2, **dadurch gekennzeichnet,** daß die Magnetwerte durch eine erste Wärmebehandlung eines rascherstarrten, amorphen Legierungsbandes zur Erzielung der feinkristallinen Phase in einem Magnetfeld parallel zur Bandrichtung (Längsfeld) und eine zweite Wärmebehandlung in einem Magnetfeld senkrecht zur Bandrichtung (Querfeld) erhältlich sind.

4. Stromwandler nach einem der vorhergehenden Ansprüche, **gekennzeichnet durch** einen Magnetkern mit einer Induktionsamplitude von 0,7 T bei einer Feldstärkeamplitude zwischen 10 bis 120 mA/cm (50 Hz Sinusanregung).

5. Pulsstromsensitiver Fehlerstromschutzschalter mit einem Stromwandler (1) nach einem der vorhergehenden Ansprüche sowie mit diesem verbundenen Mitteln (2) zur Unterbrechung eines Stromkreises.

6. Fehlerstromschutzschalter nach Anspruch 5,
**dadurch gekennzeichnet**, daß die Funktionsweise des Fehlerstromschutzschalters auch bei Abkopplung des sekundärseitigen Resonanzkreises vom Stromwandler (1) gewährleistet ist.

7. Wärmebehandlungsverfahren zur Erhöhung des dymanischen Induktionshubes in Magnetkernen für einen Fehlerstromschutzschalter nach einem der Ansprüche 1 bis 6,
**gekennzeichnet durch** eine erste Wärmebehandlung zur Erzielung einer feinkristallinen Phase mit einer Korngröße von weniger als 100 nm in einem Magnetfeld parallel zur Bandrichtung (Längsfeld) und eine zweite Wärmebehandlung in einem Magnetfeld senkrecht zur Bandrichtung (Querfeld).

## Claims

1. Current transformer (1) for residual current devices having a magnet core (3) made of a soft-magnetic iron-based alloy, more than 50% of whose structure is composed of fine-crystalline grains with a grain size of less than 100 nm and which, in addition to an iron content of more than 60% by atomic weight moreover has (as % by atomic weight) 0.5 to 2% copper, 2 to 5% of at least one of the metals niobium, tungsten, tantalum, zirconium, hafnium, titanium and/or molybdenum, 5 to 14% of boron as well as silicon, characterized in that, in order that the current transformer has a response which is sensitive to pulsed currents, the magnet core (3) has a remanence ratio Br / Bs < 0.3, a dynamic induction change AB(dyn) of more than 0.6 T at a field strength amplitude of 100 mA/cm, a maximum dynamic induction change of more than 0.7 T and a ratio of the dynamic induction change to the induction amplitude ΔB(dyn)/B̂ of more than 0.7, and the silicon content of the alloy is 14 to 17%.

2. Current transformer according to Claim 1, characterized by a remanence ratio of less than 0.1.

3. Current transformer according to Claim 1 or 2, characterized in that the magnet values are obtained by a first heat treatment of a relatively fast solidified, amorphous alloy strip to achieve the fine-crystalline phase in a magnetic field parallel to the strip direction (longitudinal field), and a second heat treatment in a magnetic field at right angles to the strip direction (transverse field).

4. Current transformer according to one of the preceding claims, characterized by a magnet core having an induction amplitude of 0.7 T at a field strength amplitude of between 10 and 120 mA/cm (50 Hz sinusoidal excitation).

5. Residual current device which is sensitive to pulsed currents and has a current transformer (1) according to one of the preceding claims, and which has means, which are connected to said current transformer (1) for interrupting a circuit.

6. Residual current device according to Claim 5, characterized in that the method of operation of the residual current device is also ensured if the resonant circuit on the secondary side is decoupled from the current transformer (1).

7. Heat treatment methods to increase the dynamic induction change in magnet cores for a residual current device according to one of Claims 1 to 6, characterized by a first heat treatment to achieve a fine-crystalline phase with a grain size of less than 100 nm in a magnetic field parallel to the strip direction (longitudinal field), and a second heat treatment in a magnetic field at right angles to the strip direction (transverse field).

## Revendications

1. Transformateur de courant (1) pour un disjoncteur à courant de défaut, comportant un noyau magnétique (3) en un alliage magnétique doux à base de fer dont la structure est constituée à plus de 50 % de grains à fins cristaux ayant une grosseur de grains inférieure à 100 nm et qui contient en pourcentages atomiques, outre plus de 60 % de fer en pourcentages atomiques de 0,5 à 2 % de cuivre, de 2 à 5 % d'au moins l'un des métaux que sont le niobium, le tungstène, le tantale, le zirconium, l'hafnium, le titane et/ou le molybdène, de 5 à 14 % de bore, ainsi que du silicium, **caractérisé par le fait que**, pour que le transformateur de courant soit sensible aux courants pulsés, le noyau magnétique (3) a un rapport de rémanence Br/Bs inférieur à 0,3, une augmentation d'induction dynamique ΔB (dyn) supérieure à 0,6 T pour une intensité de champ de 100 mA/cm, une augmentation d'induction dynamique maximale supérieure à 0,7 T et un rapport de l'augmentation d'induction dynamique à l'amplitude d'induction ΔB(dyn)/B̂ supérieur à 0,7 et que la teneur en silicium de l'alliage va de 14 à 17 %.

2. Transformateur de courant selon la revendication 1, **caractérisé par** un rapport de rémanence inférieur à 0,1.

3. Transformateur de courant selon la revendicaticn 1 ou 2, **caractérisé par le fait que** les valeurs magnétiques peuvent être obtenues par un premier traitement thermique d'un ruban d'alliage brusquement refroidi et amorphe dans un champ magnétique parallèle au sens de la longueur du ruban (champ longitudinal) pour obtenir la phase à fins cristaux et par un second traitement thermique dans un champ magnétique perpendiculaire au sens de la longueur du ruban (champ transversal).

4. Transformateur de courant selon l'une des revendications précédentes, **caractérisé par** un noyau magnétique ayant une amplitude d'induction de 0,7 T pour une intensité de champ comprise entre 10 et 120 mA/cm (pour une excitation sinusoïdale à 50 Hz).

5. Disjoncteur à courant de défaut sensible aux courants pulsés, comportant un transformateur de courant (1) selon l'une des revendications précédentes et des moyens (2) reliés à ce transformateur de courant et destinés à couper un circuit de courant.

6. Disjoncteur à courant de défaut selon la revendication 5, **caractérisé par le fait que** le fonctionnement du disjoncteur à courant de défaut est aussi garanti lorsque le circuit résonnant côté secondaire est déconnecté du transformateur de courant (1).

7. Procédé de traitement thermique pour augmenter l'amplitude d'induction dynamique dans des noyaux magnétiques destinés à un disjoncteur à courant de défaut selon l'une des revendications 1 à 6, **caractérisé par** un premier traitement thermique pour obtenir une phase à fins cristaux avec une grosseur de grains inférieure à 100 nm dans un champ magnétique parallèle au sens de la longueur du ruban (champ longitudinal) et un second traitement thermique dans un champ magnétique perpendiculaire au sens de la longueur du ruban (champ transversal).
